# EUROPÄISCHE PATENTSCHRIFT

(11) **EP 3 402 970 B1**
(45) Veröffentlichungstag und Bekanntmachung des Hinweises auf die Patenterteilung: **27.12.2023**
(21) Anmeldenummer: 16798751.0
(22) Anmeldetag: 22.11.2016
(51) Int. Cl.: F02B 29/04, F02M 35/02, F02M 35/024, F02M 35/08, F02M 35/10, F02M 35/108, F02M 35/14

(54) **LUFTFILTERVORRICHTUNG FÜR EIN KRAFTFAHRZEUG**
AIR FILTER DEVICE FOR A MOTOR VEHICLE
DISPOSITIF DE FILTRE À AIR POUR UN VÉHICULE AUTOMOBILE

(30) Priorität: 15.01.2016 DE 102016200417
(43) Veröffentlichungstag der Anmeldung: 21.11.2018
(73) Patentinhaber: Bayerische Motoren Werke Aktiengesellschaft, 80809 München (DE)
(72) Erfinder: BAUMGARTNER, Werner, 4451 Garsten (AT); DEBEVEC, Christian, 4595 Waldneukirchen (AT); RAAB, Volker, 4523 Neuzeug (AT); BARTL, Johannes, 4482 Ennsdorf (AT)
(86) Internationale Anmeldenummer: PCT/EP2016/078413
(87) Internationale Veröffentlichungsnummer: WO 2017/121521

(56) Entgegenhaltungen:
- WO-A1-03/074849
- DE-A1- 19 926 135
- DE-U1- 9 307 147
- JP-A- H11 315 762
- US-A1- 2006 168 920
- US-A1- 2006 272 622
- US-A1- 2010 186 354
- US-B1- 9 062 639

## Beschreibung

Die Erfindung betrifft eine Luftversorgungsbaugruppe für einen Verbrennungsmotor eines Kraftfahrzeugs mit einer Luftfiltervorrichtung mit einem Filtergehäuse, das einen Lufteinlass- und einen Luftauslass aufweist, sowie einem Filtereinsatz, der im Filtergehäuse aufgenommen ist und das Innere des Filtergehäuses in einen Rohluftabschnitt und einen Reinluftabschnitt unterteilt.

Derartige Luftfiltervorrichtungen sind aus dem Stand der Technik allgemein bekannt und werden beispielsweise bei Kraftfahrzeugen eingesetzt, um von einem Verbrennungsmotor des Kraftfahrzeugs angesaugte Luft zu reinigen und einen einwandfreien Verbrennungsprozess zu gewährleisten. Eine kontinuierliche Luftzufuhr ist dabei für die Funktion des Verbrennungsmotors unerlässlich.

Mit sinkender Temperatur der dem Verbrennungsmotor zugeführten Luft steigt die Luftmasse in einem vorgegebenen Luftvolumen an, was zu einer höheren Leistung des Verbrennungsmotors führt. Ein Lufteinlass der Luftfiltervorrichtung ist daher im Motorraum mit Bezug auf die Fahrtluft üblicherweise stromaufwärts von Kühlvorrichtungen wie einem Motorkühler, einem Ladeluftkühler oder eines Klimaanlagenkondensators angeordnet, um möglichst kalte Luft anzusaugen.

Die gattungsgemäße US 2006/0272622 A1 beschreibt ein System, eine Vorrichtung und ein Verfahren zur Kühlung von Ansaugluft eines Diesel-Motors zur Erhöhung der Luftdichte und folglich des Sauerstoffgehalts, wodurch mit dem daraus resultierenden gekühlten Luft-Kraftstoff-Gemisch eine höhere Leistung, ein höheres Drehmoment und ein niedrigerer Kraftstoffverbrauch bei gleichzeitiger Emissionsreduzierung erreicht werden kann.

Bei starkem Schneefall oder Schneeverwehungen kann es aufgrund der frontseitig exponierten Lage des Lufteinlasses vorkommen, dass Eis und/oder Schnee in den Rohluftabschnitt des Filtergehäuses gelangt und dort den Filtereinsatz zusetzt oder vereist, sodass der Verbrennungsmotor über die Luftfiltervorrichtung nur noch wenig oder gar keine Luft mehr ansaugen kann.

In der US 2010/0186354 A1 ist eine Vorrichtung zur Luftfilterung von Ansaugluft in Fahrzeugen gezeigt, die dadurch charakterisiert ist, dass eine zweite Ansaugöffnung vor dem Zusammenbau bei Bestellung einer höherwertigeren Luftfiltereinheit einmalig durch manuellem Kraftaufwand geöffnet werden kann, um ein Ansaugen von wärmer Ansaugluft aus dem Motorraum zu ermöglichen.

Die WO 03/074849 A1 beschreibt einen platzsparenden Aufbau eines luftgekühlten Frontkühlermoduls.

Aus der DE 93 07 147 U1 ist ein Luftfilter mit einem ersten Ansaugrohr bekannt, das mit einem Siebkorb versehen ist. Für den Fall, dass der Siebkorb durch Schnee zugesetzt wird, ist ein weiteres Ansaugrohr vorgesehen, das druckabhängig öffnet und schließt und Luft aus einem schneefreien Bereich des Motorraums ansaugt. Dabei sind die Öffnungen der Ansaugrohre einander zugewandt, sodass die über das zweite Ansaugrohr einströmende warme Luft ein Abtauen des im Siebkorb angesammelten Schnees bewirkt.

In der JP H11 315762 A ist ein Luftfilter gezeigt, bei dem Luft durch die temperaturabhängige Verstellung einer schenkbaren Leitplatte wahlweise direkt in einen Rohluftraum oder durch einen Rohrabschnitt mit einem Wärmetauscher geleitet wird und so Eintritt in den Rohluftraum aufgewärmt in den Rohluftraum strömt.

Die DE 199 26 135 A1 zeigt einen weiteren Luftfilter mit einem ersten Ansaugrohr mit Siebkorb und einem zweiten Ansaugrohr, welches in Abhängigkeit des Druckes im Rohluftraum durch eine Klappe geöffnet oder verschlossen ist.

Die US 2006/0168920 A1 offenbart einen Luftfilter mit einem primären Einlass, der einen primären Durchgang definiert, und einem sekundären Einlass, der einen Bypass-Durchgang definiert, der geöffnet wird, wenn ein Luftstrom durch den primären Durchgang niedriger als ein kritisches Niveau ist.

Aufgabe der Erfindung ist es, eine Luftversorgungsbaugruppe für ein Kraftfahrzeug zu schaffen, die auch bei einem durch Schnee oder Eis zugesetzten Filtereinsatz ein Ansaugen von Luft durch den Verbrennungsmotor ermöglicht und damit zumindest einen Notlauf des Verbrennungsmotors gewährleistet.

Diese Aufgabe wird erfindungsgemäß gelöst durch eine Luftversorgungsbaugruppe nach Anspruch 1. Durch die Erfindung kann der Verbrennungsmotor über die Bypass-Leitung durch den Ladeluftkühler erwärmte Luft ansaugen. Diese erwärmte Luft ist schnee- und eisfrei, sodass der Filtereinsatz weder zugesetzt wird noch vereist. Über die Bypass-Leitung sind somit eine Grundversorgung des Verbrennungsmotors mit Luft und dementsprechend zumindest ein Notlauf des Motors gewährleistet.

Durch den genannten Gehäusekanal wird die über die Bypass-Leitung angesaugte Luft nicht mit derjenigen Luft vermischt, die über einen stromaufwärts der Kühlvorrichtungen angeordneten Lufteinlass der Luftfiltervorrichtung angesaugt wird und unter Umständen mit Schnee und/oder Eis beladen ist .

Der Filtereinsatz weist einen Bypass-Abschnitt auf, der unmittelbar an den Gehäusekanal angrenzt. Dieser Bypass-Abschnitt ist ausschließlich der Bypass-Leitung zugeordnet und somit für schneefreie, warme Ansaugluft "reserviert". Eine Kanalwand des Gehäusekanals kann dabei direkt am Filtereinsatz anliegen, um den Bypass-Abschnitt von der übrigen Ansaugluft abzugrenzen und ein Zusetzen oder Vereisen des Bypass-Abschnitts durch diese übrige Ansaugluft zu verhindern.

Durch die Erfindung wird außerdem eine einfache und zuverlässige Montage der Bypass-Leitung an einem dem Ladeluftkühler zugeordneten Ende gewährleistet.

Gemäß einer weiteren Ausführungsform der Luftfiltervorrichtung weist der Gehäusekanal eine Klappe auf, die eine Luftströmung im Gehäusekanal freigeben oder sperren kann. Die Klappe ist dabei insbesondere in ihre Sperrstellung federbeaufschlagt und bewegt sich ab einem vorbestimmbaren Unterdruck im Rohluftabschnitt in Richtung zu ihrer Freigabestellung. Mit einer solchen Klappe wird sichergestellt, dass dem Verbrennungsmotor im Falle eines nicht-zugesetzten, eisfreien Filtereinsatzes über den stromaufwärts der Kühlvorrichtungen angeordneten Lufteinlass der Luftfiltervorrichtung möglichst kühle Umgebungsluft zugeführt wird. Eine die Motorleistung beeinträchtigende Luftansaugung über die Bypass-Leitung wird erst dann freigegeben, wenn sich im Rohluftabschnitt ein vorbestimmbarer Unterdruck einstellt, der auf ein Zusetzen oder Vereisen des Filtereinsatzes schließen lässt.

Gemäß einer bevorzugten Ausführungsform ist die Luftfiltervorrichtung als Ansauggeräuschdämpfer ausgebildet, wobei unterschiedliche konstruktive Maßnahmen zur Reduktion des Ansauggeräuschs denkbar sind. Beispielsweise ist das Filtergehäuse als Reflexionsschalldämpfer ausgebildet, wobei der Filtereinsatz zusätzlich eine leichte Absorptionswirkung entfaltet. Eine weitere, üblicherweise weitaus stärkere Absorption des Ansauggeräuschs lässt sich durch einen sogenannten Ansaugschnorchel realisieren, wie er bereits aus dem Stand der Technik bekannt ist.

Gemäß einer Ausführungsform der Luftversorgungsbaugruppe weist der Ladeluftkühler einen Verbrennungslufteinlass auf, der über kühlluftumströmte Kühlrippen mit einem Verbrennungsluftauslass Strömungsverbindung steht, wobei das dem Ladeluftkühler zugeordnete Ende der Bypass-Leitung näher am Verbrennungslufteinlass als am Verbrennungsluftauslass angeordnet ist. Aufgrund des vorgelagerten Verdichters ist die Temperatur der Verbrennungsluft am Verbrennungslufteinlass des Ladeluftkühlers am größten. Daher nimmt die als Kühlluft verwendete Umgebungsluft in diesem Bereich am meisten Wärmeenergie auf, sodass gegebenenfalls in der Kühlluft mitgeführte Schnee- oder Eispartikel geschmolzen werden. Diese leicht erwärmte, insbesondere schnee- und eisfreie Kühlluft ist besonders geeignet, um bei zugesetztem oder vereistem Filtereinsatz der Luftfiltervorrichtung über die Bypass-Leitung angesaugt und dem Verbrennungsmotor zugeführt zu werden.

Besonders bevorzugt ist das dem Ladeluftkühler zugeordnete Ende der Bypass-Leitung an einem zum Verbrennungslufteinlass benachbarten Rand der Luftauslassseite angeordnet. Durch diese randseitige Anordnung wird sichergestellt, dass die wärmste und damit auch am ehesten schnee- und eisfreie Kühlluft über die Bypass-Leitung vom Verbrennungsmotor angesaugt wird. Ein Zusetzten oder Vereisen des Filtereinsatzes aufgrund der über die Bypass-Leitung angesaugten Kühlluft ist somit weitgehend ausgeschlossen.

In dieser Ausführungsform kann der Lüfterrahmen eine Klappe aufweisen, welche die Öffnung im Lüfterrahmen freigeben oder sperren kann. Die Klappe ist dabei insbesondere in ihre Sperrstellung federbeaufschlagt und bewegt sich ab einem vorbestimmbaren Unterdruck im Rohluftabschnitt in Richtung zu ihrer Freigabestellung. Mit einer solchen Klappe wird sichergestellt, dass dem Verbrennungsmotor im Falle eines nicht-zugesetzten, eisfreien Filtereinsatzes über den stromaufwärts der Kühlvorrichtungen angeordneten Lufteinlass der Luftfiltervorrichtung möglichst kühle Umgebungsluft zugeführt wird. Eine die Motorleistung beeinträchtigende Luftansaugung über die Bypass-Leitung wird erst dann freigegeben, wenn sich im Rohluftabschnitt ein vorbestimmter Unterdruck einstellt, der auf ein Zusetzen oder Vereisen des Filtereinsatzes schließen lässt.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Ansicht einer erfindungsgemäßen Luftversorgungsbaugruppe mit einer Luftfiltervorrichtung;
- Figur 2 ein Detail der Luftversorgungsbaugruppe gemäß Figur 1 im Anschlussbereich einer Bypass-Leitung an einen Lüfter;
- Figur 3 einen Detailschnitt durch die Luftversorgungsbaugruppe gemäß Figur 1 im Anschlussbereich einer Bypass-Leitung an einen Lüfter;
- Figur 4 eine Draufsicht auf ein offenes Filtergehäuse der Luftfiltervorrichtung;
- Figur 5 eine Draufsicht auf einen Filtereinsatz der Luftfiltervorrichtung;
- Figur 6 eine Draufsicht auf die Luftfiltervorrichtung im zusammengesetzten Zustand; und
- Figur 7 einen Schnitt VI-VI durch die Luftfiltervorrichtung gemäß Figur 6.

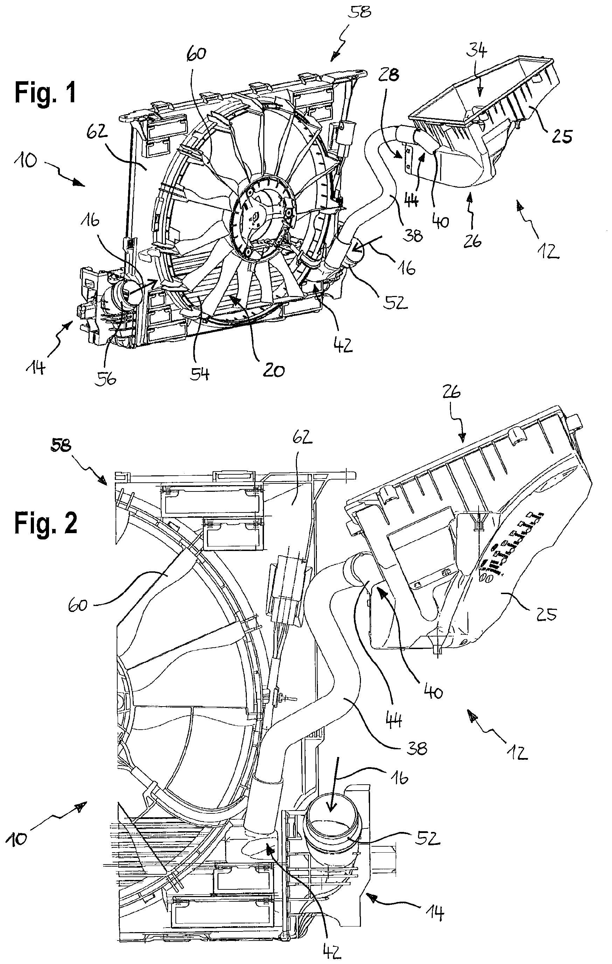

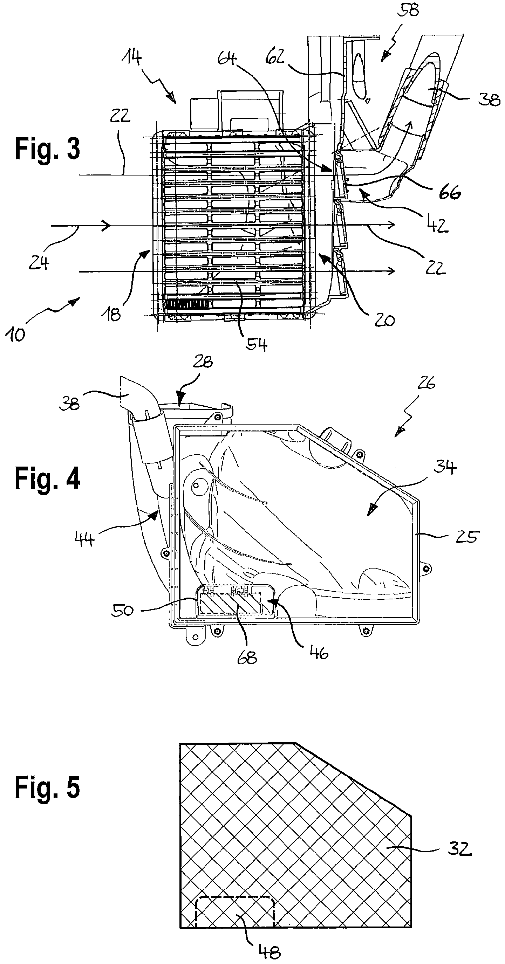

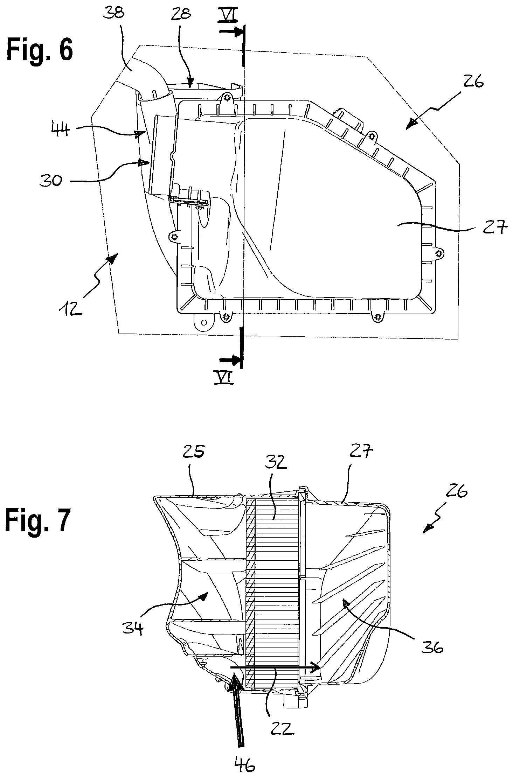

Die Figuren 1 bis 3 zeigen eine Luftversorgungsbaugruppe 10 für einen Verbrennungsmotor eines Kraftfahrzeugs, mit einer Luftfiltervorrichtung 12, die in den Figuren 4 bis 7 näher dargestellt ist, sowie einem luftgekühlten Ladeluftkühler 14 zur Kühlung einer dem Verbrennungsmotor zuzuführenden Verbrennungsluft 16, der eine Lufteinlassseite 18 sowie eine entgegengesetzte Luftauslassseite 20 für Kühlluft 22 aufweist und gemäß Figur 3 in einer Luftströmungsrichtung 24 von Kühlluft 22 durchströmbar ist.

Die Luftfiltervorrichtung 12 umfasst ein Filtergehäuse 26, das einen Lufteinlass 28 und einen Luftauslass 30 aufweist, einen Filtereinsatz 32, der im Filtergehäuse 26 aufgenommen ist und das Innere des Filtergehäuses 26 in einen Rohluftabschnitt 34 und einen Reinluftabschnitt 36 unterteilt, sowie eine Bypass-Leitung 38 zur Luftzufuhr in den Rohluftabschnitt 34.

Im vorliegenden Ausführungsbeispiel ist das Filtergehäuse 26 zweiteilig ausgeführt und weist einen schalenförmigen Gehäuseboden 25 sowie einen Gehäusedeckel 27 auf, wobei im Gehäuseboden 25 der Lufteinlass 28 und im Gehäusedeckel 27 der Luftauslass 30 ausgebildet ist.

Die Bypass-Leitung 38 erstreckt sich gemäß Figur 1 von einer Anschlussöffnung 40 im Filtergehäuse 26, konkret im Gehäuseboden 25, bis zu einem Kühler des Kraftfahrzeugs.

Der Kühler ist erfindungsgemäß ein Ladeluftkühler 14 des Kraftfahrzeugs, da dieser besonders rasch durchströmt wird von warmer Verbrennungsluft 16, die durch als Kühlluft 22 verwendete Umgebungsluft gekühlt werden muss. Somit ist an der Luftauslassseite 20 des Ladeluftkühlers 14 bereits kurz nach Inbetriebnahme des Kraftfahrzeugs erwärmte Kühlluft 22 vorhanden. Nicht gemäß der Erfindung wäre jedoch auch denkbar, dass es sich bei dem Kühler um einen Motorkühler oder einen Klimaanlagenkondensator handelt.

Zur Aufnahme von im Ladeluftkühler 14 erwärmter Kühlluft 22 grenzt ein dem Ladeluftkühler 14 zugeordnetes Ende 42 der Bypass-Leitung 38 an die Luftauslassseite des Ladeluftkühlers 14 an. Ein entgegengesetztes, dem Filtergehäuse 26 zugeordnetes Ende 44 der Bypass-Leitung 38 ist hingegen über die Anschlussöffnung 40 des Filtergehäuses 26 mit dem Rohluftabschnitt 34 verbunden, um diesem die erwärmte Kühlluft 22 von der Luftauslassseite 20 des Ladeluftkühlers 14 zuzuführen.

Wie in Figur 4 angedeutet, weist der Gehäuseboden 25 des Filtergehäuses 26 zwischen der Anschlussöffnung 40 und dem Filtereinsatz 32 einen Gehäusekanal 46 auf, um die erwärmte Kühlluft 22 aus der Bypass-Leitung 38 durch den Rohluftabschnitt 34 bis unmittelbar zum Filtereinsatz 32 zu leiten.

Die Figur 5 zeigt eine Draufsicht des Filtereinsatzes 32 mit einem gestrichelt hervorgehobenen Bypass-Abschnitt 48, der unmittelbar an den Gehäusekanal 46 des Filtergehäuses 26 angrenzt. Dieser Bypass-Abschnitt 48 ist (ausschließlich) der Bypass-Leitung 38 zugeordnet und damit im Wesentlichen für schneefreie, warme Kühlluft 22 aus der Bypass-Leitung 38 "reserviert". Um eine Vermischung mit der unter Umständen mit Schnee- oder Eispartikeln beladenen Ansaugluft im Rohluftabschnitt 34 zu verhindern, kann eine Kanalwand 50 des Gehäusekanals 46 direkt am Filtereinsatz 32 anliegen, um den Bypass-Abschnitt 48 vom übrigen Filtereinsatz 32 abzugrenzen. Auf diese Weise ist über die Bypass-Leitung 38, den Gehäusekanal 46 und den Bypass-Abschnitt 48 zumindest eine Notversorgung des Verbrennungsmotors mit Kühlluft 22 sichergestellt, wobei diese Kühlluft 22 dann als Ansaug- bzw. Verbrennungsluft 16 verwendet wird.

Anhand der Figur 1 wird deutlich, dass der Ladeluftkühler 14 einen Verbrennungslufteinlass 52 aufweist, der über kühlluftumströmte Kühlrippen 54 mit einem Verbrennungsluftauslass 56 in Strömungsverbindung steht, wobei das dem Ladeluftkühler 14 zugeordnete Ende 42 der Bypass-Leitung 38 näher am Verbrennungslufteinlass 52 als am Verbrennungsluftauslass 56 angeordnet ist. Konkret ist das dem Ladeluftkühler 14 zugeordnete Ende 42 der Bypass-Leitung 38 sogar unmittelbar an einem zum Verbrennungslufteinlass 52 benachbarten Rand der Luftauslassseite 20 des Ladeluftkühlers 14 angeordnet (siehe Figur 2).

Die den Ladeluftkühler 14 in Luftströmungsrichtung 24 durchströmende Kühlluft 22 kann nahe des Verbrennungslufteinlasses 52 am meisten Wärmeenergie von der einströmenden, warmen Verbrennungsluft 16 aufnehmen und dadurch gegebenenfalls mitgeführte Schnee- oder Eispartikel abschmelzen. Folglich wird durch die nah am Verbrennungslufteinlass 52 angeordnete Bypass-Leitung 38 sichergestellt, dass die über die Bypass-Leitung 38 in das Filtergehäuse 26 strömende Ansaugluft im Wesentlichen schnee- und eisfrei ist.

Wie in den Figuren 1 bis 3 dargestellt, ist angrenzend an die Luftauslassseite 18 des Ladeluftkühlers 14 ein Lüfter 58 vorgesehen, der die Kühlluft 22 in Luftströmungsrichtung 24 beaufschlagt und ein Lüfterrad 60 sowie einen Lüfterrahmen 62 aufweist. Das dem Ladeluftkühler 14 zugeordnete Ende 42 der Bypass-Leitung 38 ist am Lüfterrahmen 62 befestigt und steht über eine Öffnung 64 im Lüfterrahmen 62 mit der Luftauslassseite 20 des Lageluftkühlers 14 in Strömungsverbindung.

Der Lüfterrahmen 62 weist gemäß Figur 3 eine Klappe 66 auf, welche die Öffnung 64 im Lüfterrahmen 62 freigeben oder sperren kann. Vorzugsweise ist die Klappe 66 in ihre Sperrstellung gemäß Figur 3 federbeaufschlagt und bewegt sich ab einem vorbestimmbaren Unterdruck im Rohluftabschnitt 34 der Luftfiltervorrichtung 12 in Richtung zu ihrer Freigabestellung. Dadurch ist auf einfache Art und Weise sichergestellt, dass im schnee- und eisfreien Normalbetrieb der Luftversorgungsbaugruppe 10 ein Ansaugen von erwärmter Kühlluft 22 über die Bypass-Leitung 38 durch die Klappe 66 gesperrt ist. Die Luftzufuhr für den Verbrennungsmotor erfolgt über den Lufteinlass 28 der Luftfiltervorrichtung 12, wobei über diesen Lufteinlass 28 möglichst kühle Umgebungsluft von stromaufwärts der vorgesehenen Kühler angesaugt wird, um eine besonders hohe Motorleistung zu erzielen. Erst wenn der Unterdruck im Rohluftabschnitt 34 der Luftfiltervorrichtung 12 einen vorgegebenen Wert unterschreitet, wird von einem Zusetzen oder Vereisen des Filtereinsatzes 32 ausgegangen und die Bypass-Leitung 38 über die Klappe 66 freigegeben, damit eine zuverlässige Luftversorgung des Verbrennungsmotors sichergestellt ist.

Alternativ kann auch im Gehäusekanal 46 des Filtergehäuses 26 eine Klappe 68 vorgesehen sein, die eine Luftströmung im Gehäusekanal 46 freigeben oder sperren kann. Die in Figur 3 dargestellte Klappe 66 am Lüfterrahmen 62 wäre in diesem Fall dann entweder dauerhaft geöffnet oder könnte entfallen.

Gegenüber der am Lüfterrahmen 62 ausgebildeten Klappe 66 bringt die im Filtergehäuse 26 ausgebildete Klappe 68 mit Blick auf eine Minimierung der Ansauggeräusche insbesondere akustische Vorteile mit sich.

Darüber hinaus können weitere, aus dem Stand der Technik allgemein bekannte konstruktive Geräuschdämpfungsmaßnahmen ergriffen werden, um unerwünschte Ansauggeräusche in der Luftfiltervorrichtung 12 zu verringern. Die Luftfiltervorrichtung 12 ist dann in diesem Fall als Ansauggeräuschdämpfer ausgebildet.

## Patentansprüche

1. Luftversorgungsbaugruppe für einen Verbrennungsmotor eines Kraftfahrzeugs, umfassend
eine Luftfiltervorrichtung (12) mit einem Filtergehäuse (26), das einen Lufteinlass (28) und einen Luftauslass (30) aufweist, einem Filtereinsatz (32), der im Filtergehäuse (26) aufgenommen ist und das Innere des Filtergehäuses (26) in einen Rohluftabschnitt (34) und einen Reinluft-abschnitt (36) unterteilt, wobei eine Bypass-Leitung (38) zur Luftzufuhr von erwärmter Luft in den Rohluftabschnitt (34) vorhanden ist, die sich von einer Anschlussöffnung (40) im Filtergehäuse erstreckt, und das Filtergehäuse (26) zwischen der Anschlussöffnung (40) und dem Filtereinsatz (32) einen Gehäusekanal (46) aufweist, wobei der Filtereinsatz (32) einen Bypass-Abschnitt (48) aufweist, der unmittelbar an den Gehäusekanal (46) angrenzt, **gekennzeichnet durch**
einen luftgekühlten Ladeluftkühler (14) zur Kühlung einer dem Verbrennungsmotor zuzuführenden Verbrennungsluft (16), der eine Lufteinlassseite (18) sowie eine Luftauslassseite (20) für Kühlluft (22) aufweist und in einer Luftströmungsrichtung (24) von Kühlluft (22) durchströmbar ist,
wobei ein dem Ladeluftkühler (14) zugeordnetes Ende (42) der Bypass-Leitung (38) an die Luftauslassseite (20) des Ladeluftkühlers (14) angrenzt und
wobei angrenzend an die Luftauslassseite (20) des Ladeluftkühlers (14) ein Lüfter (58) vorgesehen ist, der die Kühlluft (22) in Luftströmungs-richtung (24) beaufschlagt und ein Lüfterrad (60) sowie einen Lüfterrahmen (62) aufweist, wobei das dem Ladeluftkühler (14) zugeordnete Ende (42) der Bypass-Leitung (38) am Lüfterrahmen (62) befestigt ist und über eine Öffnung (64) im Lüfterrahmen (62) mit der Luftauslassseite (20) des Ladeluftkühlers (14) in Strömungsverbindung steht.

2. Luftversorgungsbaugruppe nach Anspruch 1, **dadurch gekennzeichnet, dass** der Ladeluftkühler (14) einen Verbrennungslufteinlass (52) aufweist, der über kühlluftumströmte Kühlrippen (54) mit einem Verbrennungsluftauslass (56) des Ladeluftkühlers (14) in Strömungsverbindung steht, wobei das dem Ladeluftkühler (14) zugeordnete Ende (42) der Bypass-Leitung (38) näher am Verbrennungslufteinlass (52) als am Verbrennungsluftauslass (56) angeordnet ist.

3. Luftversorgungsbaugruppe nach Anspruch 1 oder 2, **dadurch gekennzeichnet, dass** das dem Ladeluftkühler (14) zugeordnete Ende (42) der Bypass-Leitung (38) an einem zum Verbrennungslufteinlass (52) benachbarten Rand der Luftauslassseite (20) angeordnet ist.

4. Luftversorgungsbaugruppe nach Anspruch 3, **dadurch gekennzeichnet, dass** der Lüfterrahmen (62) eine Klappe (66) aufweist, welche die Öffnung (64) im Lüfterrahmen (62) freigeben oder sperren kann.

5. Luftversorgungsbaugruppe nach einem der vorhergehenden Ansprüche, **dadurch gekennzeichnet, dass** der Gehäusekanal (46) eine Klappe (68) aufweist, die eine Luftströmung im Gehäusekanal (46) freigeben oder sperren kann.

6. Luftversorgungsbaugruppe nach einem der vorhergehenden Ansprüche, **dadurch gekennzeichnet, dass** die Luftfiltervorrichtung (12) als Ansauggeräuschdämpfer ausgebildet ist.

## Claims

1. Air supply module for an internal combustion engine of a motor vehicle, comprising
an air filter device (12) having a filter housing (26) which has an air inlet (28) and an air outlet (30); a filter insert (32) which is received in the filter housing (26) and subdivides the interior of the filter housing (26) into an unfiltered-air portion (34) and a clean-air portion (36), wherein a bypass line (38) for feeding heated air into the unfiltered-air portion (34) is present, which bypass line (38) extends from a connection opening (40) in the filter housing, and the filter housing (26) between the connection opening (40) and the filter insert (32) has a housing channel (46), wherein the filter insert (32) has a bypass portion (48) which is directly adjacent to the housing channel (46), **characterized by**
an air-cooled charge-air cooler (14) for cooling combustion air (16) which is to be fed to the internal combustion engine, the charge-air cooler having an air-inlet side (18) and an air-outlet side (20) for cooling air (22), and it being possible for cooling air (22) to flow through said cooler in an air-flow direction (24);
wherein one end (42) of the bypass line (38), which is assigned to the charge-air cooler (14), is adjacent to the air-outlet side (20) of the charge-air cooler (14); and
wherein a fan (58) is provided adjacent to the air-outlet side (20) of the charge-air cooler (14), said fan forcing the cooling air (22) in the air-flow direction (24) and having a fan wheel (60) and a fan frame (62), wherein that end (42) of the bypass line (38) that is assigned to the charge-air cooler (14) is fastened to the fan frame (62) and is fluidically connected to the air-outlet side (20) of the charge-air cooler (14) via an opening (64) in the fan frame (62) .

2. Air supply module according to Claim 1, **characterized in that** the charge-air cooler (14) has a combustion-air inlet (52) which is fluidically connected to a combustion-air outlet (56) of the charge-air cooler (14) via cooling fins (54) around which cooling air flows, wherein that end (42) of the bypass line (38) that is assigned to the charge-air cooler (14) is disposed closer to the combustion-air inlet (52) than to the combustion-air outlet (56).

3. Air supply module according to Claim 1 or 2, **characterized in that** that end (42) of the bypass line (38) that is assigned to the charge-air cooler (14) is disposed on a periphery of the air-outlet side (20) which is adjacent to the combustion-air inlet (52).

4. Air supply module according to Claim 3, **characterized in that** the fan frame (62) has a flap (66) which can release or block the opening (64) in the fan frame (62).

5. Air supply module according to one of the preceding claims, **characterized in that** the housing channel (46) has a flap (68) which can release or block an air flow in the housing channel (46).

6. Air supply module according to one of the preceding claims, **characterized in that** the air filter device (12) is configured as an intake silencer.

## Revendications

1. Ensemble d'alimentation en air pour un moteur à combustion interne d'un véhicule automobile, comprenant
un dispositif de filtration d'air (12) avec un boîtier de filtre (26) qui présente une entrée d'air (28) et une sortie d'air (30), un insert de filtre (32) logé dans le boîtier de filtre (26) et divisant l'intérieur du boîtier de filtre (26) en une section d'air brut (34) et une section d'air propre (36), une conduite de dérivation (38) pour l'amenée d'air chauffé dans la section d'air brut (34) étant présente, laquelle s'étend à partir d'une ouverture de raccordement (40) dans le boîtier de filtre, et le boîtier de filtre (26) présentant un canal de boîtier (46) entre l'ouverture de raccordement (40) et l'insert de filtre (32), l'insert de filtre (32) présentant une section de dérivation (48) directement adjacente au canal de boîtier (46), **caractérisé par**
un refroidisseur d'air de suralimentation refroidi par air (14) pour le refroidissement d'un air de combustion (16) à amener au moteur à combustion interne, qui présente un côté d'entrée d'air (18) ainsi qu'un côté de sortie d'air (20) pour l'air de refroidissement (22) et qui peut être traversé par de l'air de refroidissement (22) dans une direction d'écoulement de l'air (24),
une extrémité (42) de la conduite de dérivation (38) associée au refroidisseur d'air de suralimentation (14) étant adjacente au côté de sortie d'air (20) du refroidisseur d'air de suralimentation (14) et
il étant prévu un ventilateur (58) adjacent au côté de sortie d'air (20) du refroidisseur d'air de suralimentation (14), qui sollicite l'air de refroidissement (22) dans la direction d'écoulement de l'air (24) et qui présente une roue de ventilateur (60) ainsi qu'un cadre de ventilateur (62), l'extrémité (42) de la conduite de dérivation (38) associée au refroidisseur d'air de suralimentation (14) étant fixée au cadre de ventilateur (62) et étant en liaison d'écoulement avec le côté de sortie d'air (20) du refroidisseur d'air de suralimentation (14) par l'intermédiaire d'une ouverture (64) dans le cadre de ventilateur (62).

2. Ensemble d'alimentation en air selon la revendication 1, **caractérisé en ce que** le refroidisseur d'air de suralimentation (14) présente une entrée d'air de combustion (52) qui est en liaison d'écoulement avec une sortie d'air de combustion (56) du refroidisseur d'air de suralimentation (14) par l'intermédiaire de nervures de refroidissement (54) entourées par de l'air de refroidissement, l'extrémité (42) de la conduite de dérivation (38) associée au refroidisseur d'air de suralimentation (14) étant agencée plus près de l'entrée d'air de combustion (52) que de la sortie d'air de combustion (56).

3. Ensemble d'alimentation en air selon la revendication 1 ou 2, **caractérisé en ce que** l'extrémité (42) de la conduite de dérivation (38) associée au refroidisseur d'air de suralimentation (14) est agencée sur un bord du côté de sortie d'air (20) voisin de l'entrée d'air de combustion (52).

4. Ensemble d'alimentation en air selon la revendication 3, **caractérisé en ce que** le cadre de ventilateur (62) présente un volet (66) qui peut dégager ou bloquer l'ouverture (64) dans le cadre de ventilateur (62) .

5. Ensemble d'alimentation en air selon l'une quelconque des revendications précédentes, **caractérisé en ce que** le canal de boîtier (46) présente un volet (68) qui peut dégager ou bloquer un écoulement d'air dans le canal de boîtier (46).

6. Ensemble d'alimentation en air selon l'une quelconque des revendications précédentes, **caractérisé en ce que** le dispositif de filtration d'air (12) est configuré sous forme d'amortisseur de bruit d'aspiration.
